# EUROPÄISCHE PATENTSCHRIFT

(11) **EP 1 368 844 B1**
(45) Veröffentlichungstag und Bekanntmachung des Hinweises auf die Patenterteilung: **08.07.2009**
(21) Anmeldenummer: 01271963.9
(22) Anmeldetag: 07.12.2001
(51) Int. Cl.: H01M 4/00

(54) **VERFAHREN ZUR ABSCHEIDUNG EINES KATALYSATORS**
METHOD FOR DEPOSITING A CATALYST
PROCEDE POUR DEPOSER UN CATALYSEUR

(30) Priorität: 23.12.2000 DE 10065074
(43) Veröffentlichungstag der Anmeldung: 10.12.2003
(73) Patentinhaber: Forschungszentrum Jülich GmbH, 52425 Jülich (DE)
(72) Erfinder: SCHMITZ, Heinz, 52428 Jülich (DE); DIVISEK, Jiri, 52428 Jülich (DE)
(86) Internationale Anmeldenummer: PCT/DE2001/004655
(87) Internationale Veröffentlichungsnummer: WO 2002/052663

(56) Entgegenhaltungen:
- WO-A-99/34466
- DE-C- 19 720 688
- US-A- 4 959 132

## Beschreibung

Die Erfindung betrifft ein Verfahren zur Abscheidung eines Katalysators, insbesondere die Abscheidung in einer Membran-Elektroden-Einheit (MEA) einer Brennstoffzelle.

### Stand der Technik

Das Prinzip einer Brennstoffzelle ist aus der Druckschrift K. Kordesch, G. Simander; Fuel Cells and their Applications, VCH Weinheim, 1996*,* bekannt. Eine Brennstoffzelle weist eine Anode, einen Elektrolyten und eine Kathode auf, die zusammen eine Membran-Elektroden-Einheit (MEA) bilden. Die MEA, die aus sandwichartig angeordneten Schichten Elektrode/Membran/Elektrode zusammengesetzt ist, stellt das zentrale Element einer Brennstoffzelle dar. Jede der Elektroden ist doppelschichtig und besteht aus der Diffusions- und der Katalysatorschicht. Der Kathode wird ein oxidationsmittel, z. B. Luft und der Anode wird ein Brennstoff, z. B. Wasserstoff oder Methanol zugeführt.
Als Anodenmaterial wird bevorzugt Platin oder eine Platin/Ruthenium-Legierung verwendet. Als Kathode dient als bevorzugtes Material Platin.

In der Literatur sind verschiedene Verfahren zur Herstellung von Membran-Elektroden-Einheiten (MEA) für Brennstoffzellen beschrieben. Die katalytisch aktive Schicht befindet sich dabei typischerweise an der Phasengrenze zwischen der Gasdiffusionsschicht und dem Polymerelektrolyten. Die Aufbringung des Katalysators kann insbesondere auf zwei Wegen erfolgen.
Einerseits kann die Katalysatorschicht durch Auftragen einer dünnen Platinschicht oder eines kohlenstoffgeträgerten Platinkatalysators auf die Diffusionsschicht der Gasdiffusionselektrode aufgebracht werden (J. Power Sources 22 (1988) 359*,* J. Electrochem. Soc. 135 (1988) 2209*,* Electrochimica Acta 38 (1993) 1661); andererseits kann die Katalysatorschicht auch direkt auf die Membran aufgebracht werden, wie es zum erstenmal z. B. im US-Patent 3,297,484 dargestellt wurde.

Es hat sich gezeigt, daß bei der Direkt-Methanol-Brennstoffzelle (DMFC) sowohl der anodische Katalysator als auch der kathodische Katalysator häufig eine mangelhafte Wirkung zeigt. Dies gilt analog auch für den kathodischen Katalysator bei der Wasserstoff-PEM-Brennstoffzelle. Daher sind bislang regelmäßig hohe Katalysatorbelegungen erforderlich, die nachteilig zu erhöhten Kosten führen. Beispielsweise sind bei der Direkt-Methanol-Brennstoffzelle (DMFC) die katalytisch aktiven Elektroden mit einer Katalysatormenge bis zu einigen mg Edelmetall/cm² belegt.

Einer der Gründe für diese hohe Katalysatorbelegung ist die nicht optimale Katalysatorausnutzung. Diese ist in der Tatsache begründet, daß ein großer Anteil des Katalysators praktisch ungenutzt bleibt und somit zu überhöhten Kosten beiträgt.

Eine effektive Minimierung der Katalysatorbelegung ohne Herabsetzung der Zellleistung stellt daher für die Fachwelt ein komplexes Problem dar. Zum einen ist es wünschenswert die prinzipielle Katalysatorverteilung innerhalb der MEA-Struktur in der katalytisch aktiven Schicht zu optimieren; andererseits müssen in der eigentlichen Brennstoffzelle die konstruktionsbedingten aktiven Reaktionszonen lokalisiert und mit dem optimal verteilten Katalysator angereichert werden.

Eine ausführliche Darstellung unterschiedlicher Beschichtungsverfahren befindet sich in der Druckschrift Advances in Electrochemical Science and Technology, Volume 5, R. C. Alkire, editor, Wiley-VCH Verlag, Weinheim, 1997*.* Die kohlenstoffgeträgerten EdelmetallKatalysatoren werden in der Regel durch chemische Reduktion eines Salzes auf der Kohleoberfläche erhalten. Seltener werden auch im Handel erhältliche Pulver als nicht geträgerte Katalysatoren verwendet. Zur Umsetzung des Brennstoffes in der elektrochemischen Reaktionszone können nur die Katalysatorpartikel beitragen, die sowohl elektronisch mit dem Konstruktionsmaterial der Zelle als auch ionisch mit dem Membranmaterial kontaktiert werden. Die üblichen Verfahren für das Einbringen des Edelmetallkatalysators in die elektrochemische Reaktionszone sind chemisch-reduktiv. Da bei diesen Verfahren immer ein gewisser Anteil des eingebrachten Katalysatormaterials in elektrokatalytisch unwirksamen Bereichen abgeschieden wird, wurde mehrfach versucht, Katalysatoren gezielt nur in den elektrochemisch reaktiven Zonen zu lokalisieren.

Dazu ist aus US 5,084,144 sowie aus der Druckschrift E. J. Taylor et al.; Journal of the Electrochemical Society, Vol. 139 (1992) L45-46*,* ein elektrochemisches Beschichtungsverfahren zur Herstellung von Gasdiffusionslektroden mit dem Ziel bekannt, eine besonders niedrige Platinbelegung durch hohe Platinausnutzung zu erreichen. Dies erfolgt nach der elektrochemischen Beschichtungsmethode automatisch, da sich die Metallkeime nur dort abscheiden können, wo sich auch die elektrochemisch aktive Dreiphasengrenze befindet.

Verfahrensgemäß wird zur Herstellung einer dünnen, katalytisch aktiven Schicht die elektrolytische Abscheidung eines Katalysatormetalls aus einem Galvanikbad durchgeführt, indem die Katalysatorschicht zu der Kathode für die Abscheidung gemacht wird. Ein Nachteil besteht darin, daß bei diesem Verfahren teure edelmetallhaltige Galvanikbäder erforderlich sind, die aufwendig und kostenintensiv aufgearbeitet werden müssen. Außerdem ist die Nutzung des im Galvanikbad gelösten Edelmetalls sehr beschränkt, so daß die durch optimierte Abscheidung erhaltenen Vorteile, beispielsweise durch Spülvorgänge, rückgängig gemacht werden.

Um diese Nachteile zu beseitigen, wurde in DE 197 20 688 C1 ein Verfahren vorgeschlagen, bei dem das in der Nafion-Lösung gelöste Edelmetallsalz als eine Precursorschicht zwischen die Diffusionsschicht der Elektrode und die Elektrolytschicht gebracht und anschließend das Edelmetall elektrochemisch zielgerichtet zwischen dem Elektronenleiter und dem Elektrolyten in der aktiven Dreiphasenzone abgeschieden wird. Vorteilhaft ist bei diesem Verfahren, daß keine teuren Galvanikbäder mehr erforderlich sind. Die Ausführung des Verfahrens geht aus der Patentschrift DE 197 20 688 C1 hervor.

Da das Verfahren vor allem zur Herstellung von Polymer-elektrolyt-Membranen als MEA-Elemente einer Brennstoffzelle geeignet sein sollte, ist dabei zu gewährleisten, daß die Membran zur Aufrechterhaltung ihrer Leitfähigkeit während des Beschichtungsverfahrens kontinuierlich mit Wasser befeuchtet wird. Die Membran wird dazu in Kontakt mit flüssigem Wasser gebracht. Das Wasser dringt durch die Membran hindurch und diese wird auf dieser Weise stabil im befeuchteten Zustand gehalten. Es hat sich allerdings gezeigt, daß das Wasser teilweise die wasserlöslichen Edelmetallsalze aus der aktiven Zwischenschicht herausspülen kann, so daß hierbei unerwünschte Materialverluste entstehen können.

Um diesen Nachteil zu beseitigen, wurde in der Patentanmeldung DE 100 38 862 die elektrochemische in-situ Katalysatorabscheidung in einem Dampfsystem durchgeführt, dessen prinzipielle Ausführung ebenfalls aus DE 100 38 862 ersichtlich ist.

Eine Brennstoffzelle stellt im konstruktiven Sinne ein sandwichartiges Gebilde von Zuleitungskanälen und Leitungsstegen dar, die auf die MEA aufgepreßt sind, so daß ein Gas- und Strom-Verteilungssystem entsteht. Aufgrund der theoretischen Analyse der Betriebsvorgänge in der Elektrode einer Brennstoffzelle (A. A. Kulikovsky, J. Divisek, A. A. Kornyshev; J. Electrochemical Soc., Bd. 146 (1999) , Seiten 3981-3992*)* wird gezeigt, daß in Abhängigkeit von der prinzipiellen katalytischen Aktivität des Katalysators, die eine Grundeigenschaft des verwendeten Materials ist, der Porosität und der Leitfähigkeit der Elektrode, die durch die Bauart gegeben und weitgehend normiert sind, sowohl genutzte als auch ungenutzte Bereiche existieren. Dies bedeutet, daß die Strukturverteilung Gaskanäle/Leitungsstege große Ungleichmäßigkeiten in der Stromdichteverteilung und in der Gaszufuhr verursacht. Diese Unregelmäßigkeiten führen zu einer dreidimensionalen Verteilung der elektrochemischen Reaktionsrate in der katalytisch aktiven Schicht. Dies hat wiederum eine Ausbildung von Bereichen mit reduzierter Reaktionsrate zur Folge, die keinen Beitrag zu der Leistung der Zelle liefern. Mit Hilfe der Computersimulationen der in der Brennstoffzelle auftretenden Massen- und Ladungsströme, d. h. der Transportwege für die Reaktionsgase, die Protonen und Elektronen, wurden diese Bereiche entdeckt und lokalisiert.

Wenn die elektrische Leitfähigkeit der Zuleitungsmasse in der Verteilungsschicht klein ist, befinden sich die aktiven Bereiche unter den Leitungsstegen. Im Falle der niedrigen Diffusivität der Reaktionsgase laufen die elektrochemischen Reaktionen hauptsächlich in den Bereichen unter den Gaskanälen ab.

Für eine hohe Leitfähigkeit der Zuleitungsmasse verschwinden die Bereiche mit reduzierter Reaktionsgeschwindigkeit und es stellt sich eine homogenisierte Stromdichteverteilung ein. Hieraus kann man Vorschläge zur Verbesserung, d. h. zur Reduzierung der Katalysatorbelegung durch dessen Umverteilung in den Elektroden ableiten.

Dies wurde schon in der Patentanmeldung DE 100 38 862 auf die Weise realisiert, daß die Konzentration oder die Menge des Katalysators von der Position der Betriebsstoffkanäle und der Stromleitungsstege abhängt und in Abhängigkeit hiervon variiert. Die Methode basiert auf dem Befund, daß der Katalysator für die elektrochemische Reaktion je nach dem Betriebsmodus und der Zellkonstruktion ohne nennenswerte Leistungsverluste entweder teilweise oder vollständig aus der katalytisch aktiven Schicht entfernt werden kann. Je nach dem Betriebszustand wird der Katalysator im Falle des guten Brennstoff- bzw. Oxidationsmitteltransports durch die Diffusionsschicht aus den unter den Betriebsstoffkanälen liegenden Bereichen entfernt, bzw. im Falle des schlechten Brennstoff- bzw. Oxidationsmitteltransports durch die Diffusionsschicht, aus den unter den Stromleitungsstegen liegenden Bereichen entfernt. Nachteilig bei dieser Methode ist jedoch, daß die vorgegebenen Strukturen, die durch die Gasverteilerstrukturen vorgegeben sind, nicht immer exakt für die Katalysatorschicht nachzubilden sind. Weiterhin kann es beim Zusammenbau der Brennstoffzelle zu Verschiebungen zwischen Gasverteilerstrukturen und Katalysatorschicht kommen, so daß eine vorher optimale Struktur durch den Einbau wieder an Effektivität verliert.

### Aufgabe und Lösung

Die Aufgabe der Erfindung ist es, ein Verfahren zur Verfügung zu stellen, bei dem eine, an eine Brennstoffzelle angepaßte, optimale Katalysatorbelegung an einer Elektrode einer Membran-Elektroden-Einheit (MEA) dieser Brennstoffzelle erreicht wird.

Die Aufgabe der Erfindung wird gelöst durch ein Abscheideverfahren gemäß Hauptanspruch. Vorteilhafte Ausführungsformen des Verfahrens ergeben sich aus den darauf rückbezogenen Ansprüchen.

### Gegenstand der Erfindung

Das Verfahren nach Anspruch 1 zur elektrochemischen Abscheidung eines Katalysators aus einer Precursorschicht umfaßt die folgenden Schritte. Wenigstens eine, ein lösliches Katalysatorsalz aufweisende, Precursorschicht wird zwischen eine Membran und eine Elektrode einer Membran-Elektroden-Einheit (MEA) angeordnet, die Membran-Elektroden-Einheit wird in eine Brennstoffzelle eingebaut und die elektrochemische Abscheidung des Katalysators erfolgt *in situ* vor dem Betrieb der Brennstoffzelle.
Erfindungsgemäß weist die Precursorschicht das gelöste Katalysatorsalz auf. Dies kann beispielsweise ein Platinsalz in der Form von Pt(NO₃)₂ oder H₂PtCl₆ sein. Es kann aber auch ein Katalysatorsalzgemisch aus z. B. Pt/Rt-Salzen sein. Der Precursor selbst kann beispielsweise aus einem mit Polymer (Nafion) versetzten Kohlenstoffträger oder auch nur aus einem Gemisch Nafion/Edelmetallsalz bestehen.

Wenigstens eine Precursorschicht wird zwischen eine Membran und eine Elektrode angeordnet. Die Anordnung der Precursorschicht zwischen einer Membran und einer Elektrode erfolgt dabei mit für einen Brennstoffzellen-Fachmann bekannten Methoden. Auch der Einbau der auf diese Weise gebildeten Membran-Elektroden-Einheit (MEA) in eine Brennstoffzelle ist einem Fachmann geläufig.

Vorteilhaft wird gemäß Anspruch 2 jeweils eine Precursorschicht zwischen die Membran und eine Anode, bzw. zwischen die Membran und eine Kathode angeordnet und die entsprechenden Katalysatormetalle für beide Elektroden gleichzeitig abgeschieden. Dies vereinfacht regelmäßig den Herstellungsprozeß.

Erfindungsgemäß können die Precursorschichten die gleichen, aber auch nach Anspruch 3 unterschiedliche Katalysatorsalze und -mengen aufweisen, beispielsweise eine Pt/Rt-Salzmischung für die Precursorschicht an der Anode und reines Pt-Salz für die Kathode.

Durch den Einbau der MEA in eine Brennstoffzelle muß während der elektrochemischen Abscheidung des Katalysators aus der Precursorschicht gleichzeitig die Versorgung der Membran mit Wasser, z. B. in Form von befeuchteten Gasen, sichergestellt werden.

### Spezieller Beschreibungsteil

Im folgenden wird die Erfindung anhand von Figuren und Ausführungsbeispielen näher erläutert.
Im Rahmen der Erfindung wurde gefunden, daß die elektrochemische *in situ* Abscheidung eines in der Precursorschicht homogen gelösten Katalysatorsalzes an der Phasengrenze zwischen Elektrolyt und elektronisch leitender Phase zur Optimierung der Katalysatorverteilung innerhalb der Membran-Elektroden-Einheit (MEA) genutzt werden kann.

Es zeigen:
- Figur 1: Chemisch abgeschiedener Katalysator in der Precursorschicht zwischen Polymer-Elektrolyt (Membran) und einem Stromleiter (SdT)
- Figur 2: Elektrochemisch abgeschiedener Katalysator in der Precursorschicht zwischen Polymer- Elektrolyt (Membran) und einem Stromleiter (SdT)
- Figur 3: In einer komplett montierten Brennstoffzelle elektrochemisch unter den Stegen abgeschiede- ner Katalysator in der Precursorschicht der Membran-Elektroden-Einheit (MEA)
- Figur 4: Zyklisches Voltammogramm der elektrochemisch abgeschiedenen Katalysatorschicht mit dem für die Größe der Katalysatoroberfläche charakte- ristischen Wasserstoff-Desorptionspeak
- Figur 5: Stromdichte/Spannungskurve für eine erfin- dungsgemäß hergestellte Membran-Elektroden- Einheit

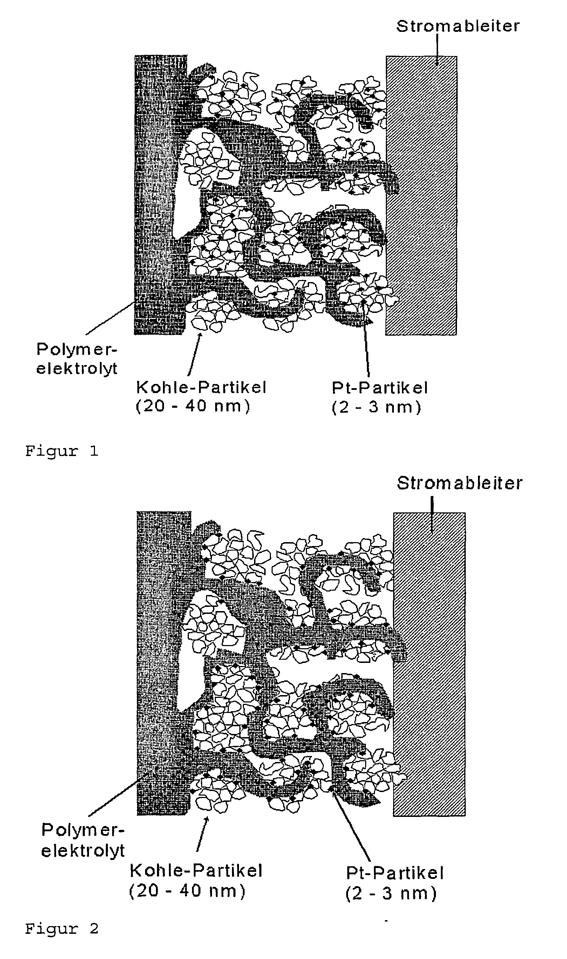

In der Figur 1 ist schematisch dargestellt, wie sich metallisches Katalysatormaterial bei einer chemischen Abscheidung in der Dreiphasenzone verteilt. Die dunkel gepunkteten Partikel stellen dabei den metallischen Katalysator dar. Man erkennt annähernd eine Gleichverteilung des Katalysators.

Im Gegensatz dazu stellt die Figur 2 die Verteilung bei einer elektrochemischen Abscheidung dar. Die Abscheidung von metallischem Katalysator erfolgt nur dort, wo durch die eingezeichneten Elektrolytwege (Nafion) ein Zusammenspiel von Stromfluß und Abscheidung ermöglicht wird. Außerhalb der Nafionwege im übrigen Trägermaterial liegt der Katalysator nicht vor. In diesem Beispiel wurde die MEA gleichmäßig durch Pt-Netze elektrisch kontaktiert.

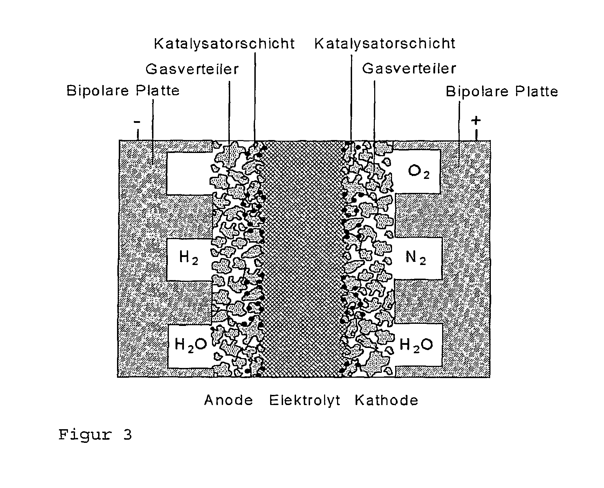

In der Figur 3 ist der Aufbau der Membran-Elektroden-Einheit eingebaut in einer Brennstoffzelle zu sehen. Die äußeren bipolaren Platten sind elektrisch kontaktiert. Durch Zufuhr von Betriebsmitteln in Form von Brennstoff (H₂ und Wasser) und Oxidationsstoff (Luft = O₂, N₂, H₂O) in den Anoden- bzw. Kathodenraum wird die Brennstoffzelle in Betrieb genommen. Die erfindungsgemäße Abscheidung des Katalysators (dunkle Punkte) erfolgt dann optimiert an den Brennstoffzellenbetrieb bzw. an der chemischen Umsetzung.

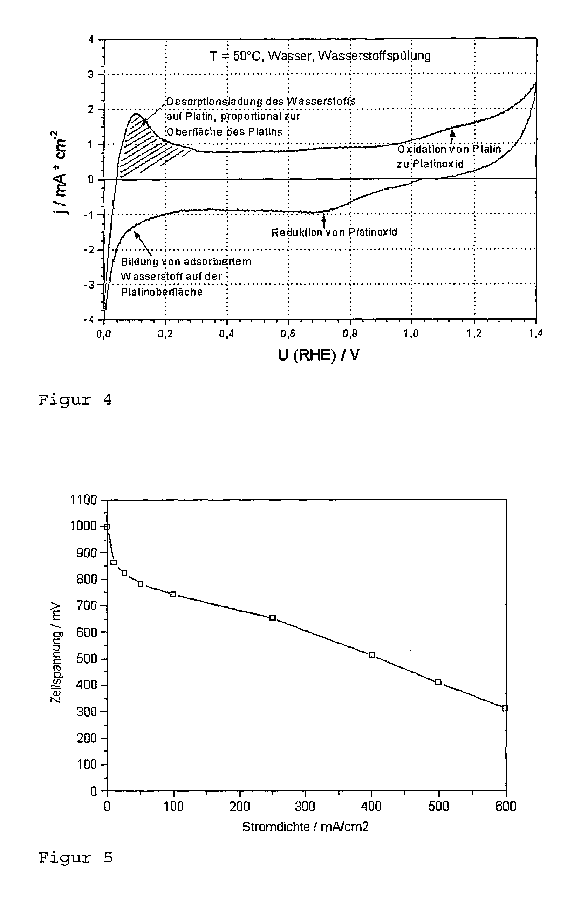

Als Nachweis für die metallische Abscheidung des Katalysators dient das zyklische Voltammogramm der so hergestellten Membran-Elektroden-Einheit (Fig.4). Der Desorptionspeak entspricht dabei der Oberfläche an metallisch abgeschiedenem Katalysator, in diesem Fall des Platins. Durch die elektrochemische Abscheidung des im MEA-Precursor erhaltenen Katalysators wird eine betriebsfertige MEA produziert, mit der die gezeigte Strom/Spannungskurve erhalten wurde (Fig.5).

### Ausführungsbeispiel

Für den Precursor werden vorzugsweise Edelmetallsalze, wie z. B. Pt-Salze, oder Edelmetallsalz-Gemische, wie z. B. Pt/Ru-Salze, nach einem geeigneten Verfahren auf die Membran aufgetragen. Für den Precursor kann vorteilhaft ein wasserlösliches Salz verwendet werden, beispielsweise Pt(NO₃)₂ oder H₂PtCl₆ (Hexachloroplatinsäure). Hierbei wird folgendermaßen verfahren:
Vulcan XC-72 (Kohle?) wird mit der Nafion-Lösung versetzt, vermischt und auf zwei Teflonfolien gesprüht (Nafion-Gehalt: 30%). Die Schichten werden getrocknet und bei 130 °C beidseitig auf eine Nafion-Membran gepreßt. Danach werden die Teflonfolien abgezogen. Auf die verbliebenen Kohleschichten wird eine Mischung aus Hexachloroplatinsäure mit Nafion gepinselt und abschließend getrocknet.
Es wurde folgende Precursorprobe erhalten:

| | | | |
|---|---|---|---|
| Vulcan XC-72: | jeweils | 4 | mg/cm² |
| Platin: | jeweils | 1 | mg/cm² |
| Nafion: | jeweils | 2.2 | mg/cm² |

Die mit Platinsalz beidseitig beschichtete Nafion-Membran wird zwischen zwei Diffusionsschichten (backing layers) zusammengepreßt, so daß sich die Precursorschichten jeweils auf der der Diffusionsschicht zugewandten Seiten befinden.

Die so hergestellte Membran-Elektrodeneinheit wird in eine elektrisch kontaktierte Brennstoffzelle eingebaut. Der Brennstoffzelle werden befeuchtete Gase (Luft) zugeführt, und der Katalysator wird durch Anlegen von Gleichstrom elektrochemich abgeschieden. Durch die dabei erfolgende elektrochemische Reduktion an der Kohle entsteht nanokristallines Pt, das als Katalysator für die Brennstoffzelle sehr gut geeignet ist. Die elektrochemische Aktivität wird durch die Wasserstoffspeicherfähigkeit im Wasserstoff-Potentialgebiet nachgewiesen.

Auf die so beschriebene Weise können die MEAs (Membran-Elektroden-Einheiten) für Brennstoffzellen hergestellt werden, die für den Brennstoffzellenbetrieb optimal geeignet sind. Deren Funktion als MEAs in einer Brennstoffzelle sind in der Figur 5 dargestellt.

## Patentansprüche

1. Verfahren zur elektrochemischen Abscheidung eines Katalysators aus einer Precursorschicht für eine Brennstoffzelle mit den Schritten
- wenigstens eine, ein Katalysatorsalz aufweisende, Precursorschicht wird zwischen eine Membran und eine Elektrode einer Membran-Elektroden-Einheit (MEA) angeordnet,
- die Membran-Elektroden-Einheit wird in eine Brennstoffzelle eingebaut,
- die elektrochemische Abscheidung des Katalysators erfolgt *in situ* in der Brennstoffzelle.

2. Verfahren nach vorhergehendem Anspruch,
**dadurch gekennzeichnet, daß** gleichzeitig eine anodenseitige und eine kathodenseitige Katalysatorabscheidung erfolgt.

3. Verfahren nach vorhergehendem Anspruch,
bei dem die anodenseitige und die kathodenseitige Precursorschicht unterschiedliche Katalysatorsalze aufweisen.

4. Verfahren nach einem der vorhergehenden Ansprüche, bei dem die Membran-Elektroden-Einheit in eine Direkt-Methanol-Brennstoffzelle eingebaut wird.

## Claims

1. Method for the electrochemical deposition of a catalyst from a precursor layer for a fuel cell with the steps
- at least one precursor layer having a catalyst salt is arranged between a membrane and an electrode of a membrane electrode assembly (MEA),
- the membrane electrode assembly is integrated into a fuel cell,
- the electrochemical deposition of the catalyst occurs *in situ* in the fuel cell.

2. Method according to the foregoing claim,
**characterised in that** an anode side and a cathode side catalyst deposition occurs simultaneously.

3. Method according to the foregoing claim,
in which the anode side and the cathode side precursor layers have different catalyst salts.

4. Method according to one of the foregoing claims,
in which the membrane electrode assembly is integrated into a direct methanol fuel cell.

## Revendications

1. Procédé de dépôt électrochimique d'un catalyseur d'une couche précurseur pour une pile à combustible, comportant les étapes suivantes .
- au moins une couche précurseur présentant un sel catalyseur est disposée entre une membrane et une électrode d'une unité membrane-électrode (MEA),
- l'unité membrane-électrode est intégrée dans une pile à combustible,
- le dépôt électrochimique du catalyseur s'effectue *in situ* dans la pile à combustible.

2. Procédé selon la revendication précédente, **caractérisé en ce que,** en même temps, un dépôt de catalyseur anodique et cathodique s'effectue.

3. Procédé selon la revendication précédente, dans lequel les couches précurseurs anodique et cathodique présentent des sels catalyseurs différents.

4. Procédé selon l'une des revendications précédentes, dans lequel l'unité membrane-électrode est intégrée dans une pile à combustible à méthanol direct.
